# EUROPEAN PATENT APPLICATION

(11) **EP 4 636 375 A1**
(43) Date of publication of application: **22.10.2025**
(21) Application number: 25169782.7
(22) Date of filing: 10.04.2025
(51) Int. Cl.: G01M 3/26

(54) **LIGHT FIXTURE PROVIDED WITH A DEVICE FOR TESTING ITS TIGHTNESS AND METHOD FOR TESTING THE TIGHTNESS OF A LIGHT FIXTURE**

(30) Priority: 15.04.2024 IT 202400008542
(71) Applicant: CLAY PAKY S.R.L., 24068 Seriate (BG) (IT)
(72) Inventor: QUADRI, Aris, 24068 SERIATE (BG) (IT); DALLA RIVA, Diego, 24050 ZANICA (BG) (IT)
(74) Representative: Studio Torta S.p.A.

(57) **Abstract**

A light fixture comprising:
at least one casing (2) configured to define at least one inner chamber (7) having a given volume;
at least one test device (10) configured to test the tightness of the at least one casing (2) and comprising:
• a pump (11) fluidically communicating with the at least one inner chamber (7) and the environment outside the casing (2) ;
• at least one pressure sensor (12) arranged in the at least one inner chamber (7);
• a venting device (14) coupled to an opening (18) of the casing (2) and configured to selectively equalise the pressure between the at least one inner chamber (7) and the environment outside the casing (2);
• a control device (15) configured to:
- control the activation of the pump (11) and the venting device (14) in such a way that a pressure difference is created between the at least one inner chamber (7) and the environment outside the casing (2);
- acquire data detected by the at least one pressure sensor (12) in an acquisition time interval;
- assess the sealing level of the casing (2) on the basis of the pressure data acquired.

## Description

### Cross-reference to related applications

This patent application claims priority from Italian patent application no. 102024000008542 filed on April 15, 2024, the entire disclosure of which is incorporated herein by reference.

### Technical field

The present invention relates to a light fixture provided with a device for testing its tightness and a method for testing the tightness of a light fixture.

The technical field of reference of the present invention refers to the field of light fixtures, such as those usable for scenic needs in the entertainment field or in the architectural field for the lighting of buildings or for signalling events.

### Background

As is known, stage light fixtures and architectural or signalling light fixtures are often used outdoors in significantly varying weather conditions.

Light fixtures that can be employed outdoors are characterized by IP degrees of protection higher than a given threshold, generally higher than 40 (such as IP 44, IP 55, IP 66) .

The IP degree of protection is a parameter defined by international standards and used to assess the degree of protection and the tightness effectiveness of casings against intruding solid particles and liquids.

Before bringing light fixtures on the market, manufacturers perform tightness tests.

Once the light fixture has been brought on the market, the tightness check can be carried out employing systems external to the light fixture that envisage additional equipment adapted to assess the existence of an incorrect sealing of the assembled parts.

However, this solution involves the need to move the light fixture to be tested from the place where it is positioned or to transport the equipment necessary for the tightness check close to the light fixture to be tested, with evident drawbacks in terms of intervention timings and costs.

Furthermore, precisely because of the intervention timings highlighted above, the tightness check is rarely carried out systematically for preventive purposes.

This involves high risks of damage to parts internal to the light fixture due to a not promptly detected deterioration in the degree of tightness.

### Disclosure of the invention

It is therefore an object of the present invention to provide a light fixture which is devoid of the prior art drawbacks highlighted herein; in particular, it is an object of the present invention to manufacture a light fixture which is capable of undergoing a tightness test in a simple and cost-effective manner, both from the functional point of view and from the constructive point of view. In accordance with such objects, the present invention relates to a light fixture comprising:
at least one casing configured to define at least one inner chamber having a given volume;
at least one test device configured to test the tightness of the at least one casing and comprising:
   - a pump fluidically communicating with the at least one inner chamber and the environment outside the casing;
   - at least one pressure sensor arranged in the at least one inner chamber;
   - a venting device coupled to an opening of the casing and configured to selectively equalise the pressure between the at least one inner chamber and the environment outside the casing;
   - a control device configured to:
      - control the activation of the pump and the venting device in such a way that a pressure difference is created between the at least one inner chamber and the environment outside the casing;
      - acquire data detected by the at least one pressure sensor in an acquisition time interval;
      - assess the sealing level of the casing on the basis of the pressure data acquired.

Advantageously, thanks to the integration in the light fixture of a device configured to test the tightness of the casing, dedicated or particular equipment is no longer necessary to check the IP level of protection of the light fixture.

Moreover, the tightness check tests for monitoring the IP degree can be thereby performed in any condition of use of the light fixture and in any installation position.

Finally, the components employed do not require structural modifications to the light fixture, and can be installed in all the light fixtures currently used without impacting on the manufacturing processes.

It is a further object of the present invention to provide a method for testing the tightness of a light fixture that is simple and cost-effective to implement.

In accordance with such objects, the present invention relates to a method for testing the tightness of a light fixture as claimed in claim 12.

### Brief description of the drawings

Further characteristics and advantages of the present invention will become apparent from the following description of a non-limiting example embodiment thereof, with reference to the figures of the accompanying drawings, wherein:
- Figure 1 is a schematic side view, with parts removed for the sake of clarity, of a light fixture according to the present invention in a first operational configuration;
- Figure 2 is a schematic side view, with parts removed for the sake of clarity, of the light fixture of Figure 1 in a second operational configuration;
- Figure 3 is a schematic side view, with parts removed for the sake of clarity, of a light fixture according to a variation of the present invention in a first operational configuration;
- Figure 4 is a schematic side view, with parts removed for the sake of clarity, of the light fixture of Figure 3 in a second operational configuration.

### Description of an embodiment of the invention

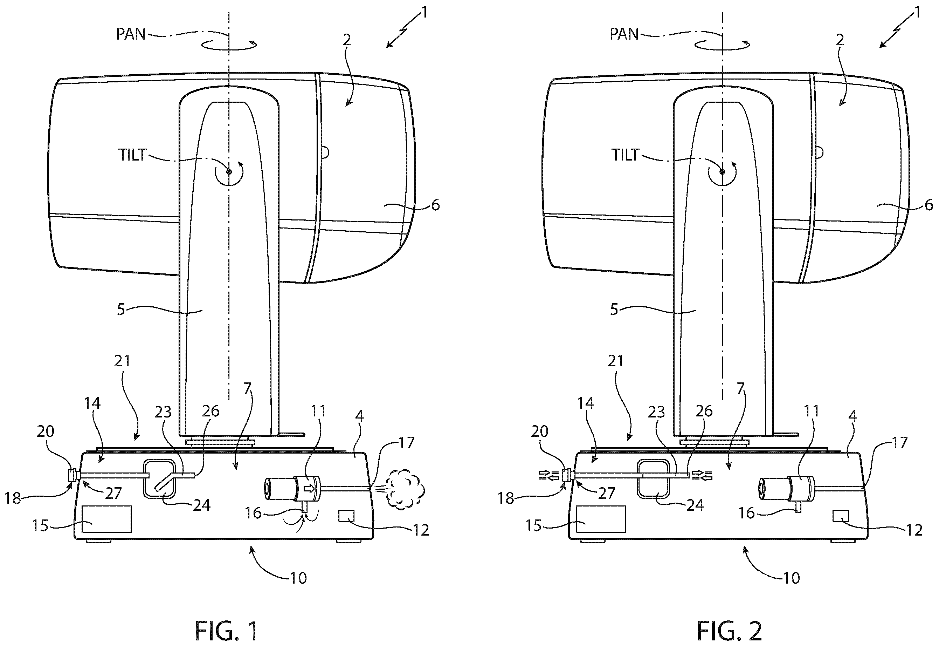

In Figure 1, reference numeral 1 indicates a light fixture.

The light fixture 1 comprises a casing 2, which defines the outer body of the whole light fixture 1 and consists of different parts assembled together.

In the non-limiting example described and illustrated herein, the casing 2 defines at least one base 4, a fork 5, and a head 6.

The fork 5 is coupled to the base 4 and is preferably rotatable with respect to the base 4 about a first axis of rotation (PAN). The head 6 is coupled to the fork 5 and is preferably rotatable about a second axis of rotation (TILT).

In the non-limiting example described and illustrated herein, the base 4, the fork 5, and the head 6 are configured to define respective chambers, connected together to define a single volume.

In the accompanying figures, only the chamber 7 defined by the base 4 is partly visible. It is understood that the other chambers (not visible) are fluidically connected to the chamber 7.

According to a not illustrated variation, the chambers defined by the head 6 and/or by the fork 5 can be separated by the chamber 7 defined by the base 4 so as to define respective distinct volumes.

The light fixture 1 according to the present invention comprises at least one test device 10 for testing the tightness of the casing 2.

In the non-limiting example described and illustrated herein, where the volume defined by the casing 2 is a single volume, the light fixture 1 comprises only one test device 10 for testing the tightness of the casing 2. In case the casing 2 defines distinct volumes, the light fixture comprises a test device for testing the tightness of each distinct volume.

Referring to Figures 1 and 2, the test device 10 comprises a pump 11, at least one pressure sensor 12, a venting device 14, and a control device 15.

The pump 11 is fluidically communicating with the at least one inner chamber 7 and the environment outside the casing 2, and is configured, as it will be specifically evident in the following, to create a pressure difference between the inner chamber 7 and the environment outside the casing 2.

In the example illustrated herein, the pump 11 is provided with a pump inlet 16 facing the at least one chamber 7 inside the casing 2, and a pump outlet 17 facing the environment outside the casing 2.

According to a not illustrated variation, the pump 11 can be provided with a pump inlet, facing the environment outside the casing 2, and a pump outlet facing the at least one chamber 7 inside the casing 2.

In the non-limiting example described and illustrated herein, the pump 11 is arranged in the chamber 7 defined by the base 4.

Therefore, when activated, the pump 11 draws air from the inside of the casing 2 and discharges it outside the casing 2, creating a negative pressure inside the chamber 7.

In the case of the variation not illustrated, in which the pump inlet faces the environment outside the casing 2 and the pump outlet in the at least one chamber 7 inside the casing 2, the activation of the pump will cause an overpressure inside the chamber 7.

The pressure sensor 12 is arranged in the inner volume defined in the casing 2 and, more precisely, in the chamber 7 defined by the base 4.

The venting device 14 is coupled to an opening 18 of the casing 2 and configured to selectively equalise the pressure between the at least one inner chamber 7 and the environment outside the casing 2. The venting device 14 is further configured to prevent the passage of liquids and particles.

In other words, the venting device 14 is capable of equalising the pressure between the inside of the light fixture 1 and the outer environment, while preventing water and contaminants from entering.
In the example illustrated herein, the opening 18 is made in the base 4 of the casing 2, and the venting device 14 is housed in the chamber 7 of the base 4.

The control device 15 is configured to control the activation of the pump 11 and the venting device 14 in such a way that a pressure difference is created between the inner chamber 7 and the environment outside the casing 2 (configuration in Figure 1), to acquire data detected by the at least one pressure sensor 12 in an acquisition time interval, and to assess the sealing level of the casing 2 on the basis of the data acquired by the pressure sensor 12. Depending on the pump employed, the pressure difference between the inner chamber 7 and the environment outside the casing 2 can be negative (negative pressure) or positive (overpressure). At the end of the step of assessing the sealing level, the control device 15 is configured to reactivate the venting device 14 so as to restore a pressure balance between the inside of the casing 2 and the outside of the casing 2 (configuration in Figure 2).

The configuration in which the venting device 14 is activated and the pump 11 is deactivated (configuration in Figure 2) is the nominal operational configuration in which no assessment of the sealing level occurs.

Instead, the configuration in Figure 1 corresponds to the operational configuration in which the sealing level is detected.

In the example illustrated herein, the control device 15 is arranged in the base 4 of the casing 2.

It is understood that the pump 11, the pressure sensor 12, the venting device 14, and the control device 15 can be arranged in other positions within the volume defined by the casing 2. For example, the pump 11 and the venting device 14 can be arranged in the fork 5, and the pressure sensor 12 in the head 6, and the control device 15 in the base 4.

The venting device 14 comprises a filter membrane (not visible in the attached Figures), a frame 20, and a closing device 21.

The filter membrane is configured to allow the passage of air and prevent the passage of liquids and solid particles. The frame 20 is configured to support the membrane and to be tightly coupled into the opening 18 of the casing 2.

The closing device 21 is configured to close the filter membrane and is adjustable by the control device 15 to selectively deactivate the venting device 14.

In the example illustrated herein, the closing device 21 comprises a duct 23 and a valve 24.

The duct 23 is provided with a vent inlet 26 housed in the inner chamber 7 and a vent outlet 27 corresponding to the opening 18 of the casing 2 to which the frame 20 is coupled.

The valve 24 is arranged between the vent inlet 26 and the vent outlet 27 and is configured to selectively prevent the passage of air from the chamber 7 towards the membrane to deactivate the venting device 14.

The valve 24 is adjustable by the control device 15 to selectively deactivate the venting device 14.

According to a variation not illustrated, the closing device can comprise systems for blocking the membrane, such as of the gate-type.

In detail, in order to create a pressure difference between the at least one inner chamber 7 and the environment outside the casing 2, the control device 15 is configured to deactivate the venting device 14 and to activate the pump 11 (configuration in Figure 1) and deactivate the pump 11 when the at least one pressure sensor 12 reaches a given threshold value.

Inside the light fixture 2, a controlled pressure difference is thereby created. In the example illustrated herein, inside the light fixture 2 a negative pressure is created.

When the pressure difference reaches the required value, the control device 15 proceeds to the step of collecting data from the sensor 12 for an acquisition time interval and, next, performs the assessment of the sealing level of the casing 2 on the basis of the pressure data detected by the sensor 12.

Preferably, the sensor 12 detects pressure data at a given sampling rate.

Once the data thus detected are acquired, the control device 15 is configured to assess a suitable sealing level if the pressures detected by the pressure sensor 12 in the acquisition time interval are all within a predefined tolerance range or to assess an unsuitable sealing level if at least one pressure detected in the acquisition time interval by the at least one pressure sensor 12 is outside the predefined tolerance range.

Once the assessment step is finished, the control device 15 reactivates the venting device 14 (configuration in Figure 2) to restore a balance between the pressure inside and outside the casing 2.

The control device 15 is controllable remotely and/or via an interface of the light fixture itself (not visible).

Advantageously, this allows the test device 10 to be activated at any time, even remotely, without necessarily requiring the light fixture 1 to be moved.

According to a not illustrated variation, the test device 10 comprises a plurality of pressure sensors arranged in different areas inside the light fixture 2. In this case, the control device is configured to assess a suitable sealing level if the pressures detected in the acquisition time interval by all the pressure sensors are within a predefined tolerance range or to assess an unsuitable sealing level if at least one pressure detected in the acquisition time interval by at least one pressure sensor is outside the predefined tolerance range. In case an unsuitable sealing level is assessed, the control device is preferably configured to signal which sensors, among the plurality of sensors, have not detected pressures within the predefined tolerance range. These data can be useful to identify more quickly the leaking zones.

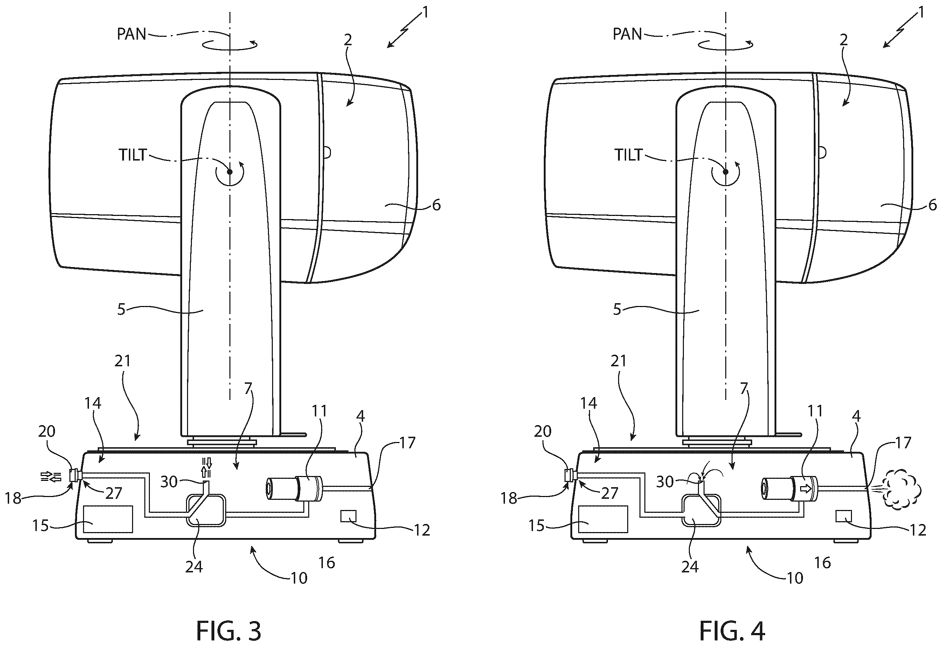

In Figures 3 and 4, a second embodiment of the test device 10 for testing the tightness of the casing 2 is illustrated. For the sake of convenience, in Figures 3 and 4 the same reference numerals used in Figures 1 and 2 are preserved to refer to identical or similar parts.

In this embodiment of the testing device 10, the pump inlet and the vent inlet coincide and define a common inlet 30, and the valve 24 of the closing device 21 is defined by a two-way valve adjustable by the control device 15 and configured to assume two positions:
- a pump supply position, wherein the two-way valve allows air to flow between the common inlet 30 and the pump 11, preventing the passage of air to the venting device 14; and
- a membrane supply position, wherein the two-way valve allows air to flow between the common inlet 30 and the membrane, preventing the passage of air to the pump 11.

Thus, in this embodiment, to obtain a given pressure condition inside the casing 2, the control device 15 deactivates the venting device 14 simply by positioning the two-way valve 24 in the pump supply position (configuration in Figure 4).

To restore the starting nominal conditions, the control device 15 moves the valve 24 in the membrane supply position (configuration in Figure 3).

Finally, it is evident that modifications and variations to the light fixture and method described and illustrated herein can be made without departing from the scope of protection of the present invention, as defined in the appended claims.

## Claims

1. Light fixture comprising:
at least one casing (2) configured to define at least one inner chamber (7) having a volume;
at least one test device (10) configured to test the tightness of the at least one casing (2) and comprising:
• a pump (11) fluidically communicating with the at least one inner chamber (7) and the environment outside the casing (2);
• at least one pressure sensor (12) arranged in the at least one inner chamber (7);
• a venting device (14) coupled to an opening (18) of the casing (2) and configured to selectively equalise the pressure between the at least one inner chamber (7) and the environment outside the casing (2);
• a control device (15) configured to:
- control the activation of the pump (11) and the venting device (14) in such a way that a pressure difference is created between the at least one inner chamber (7) and the environment outside the casing (2);
- acquire data from the at least one pressure sensor (12) in an acquisition time interval;
- assess the sealing level of the casing (2) on the basis of the pressure data acquired.

2. Light fixture according to claim 1, wherein the control device (15) is configured to control the activation of the pump (11) and the venting device (14) in such a way that a pressure difference is created between the at least one inner chamber (7) and the environment outside the casing (2) by the following steps:
- deactivating the venting device (14);
- activating the pump (11);
- deactivating the pump (11) when the at least one pressure sensor (12) measures a pressure value equal to a threshold value.

3. Light fixture according to claim 2, wherein the venting device (14) comprises:
- a filter membrane configured to allow the passage of air and prevent the passage of liquids and solid particles;
- a frame (20) configured to support the filter membrane and to be tightly coupled into the opening (18) of the casing (2);
- a closing device (21) configured to close the filter membrane; the closing device (21) being controllable by the control device (15) to selectively deactivate the venting device (14).

4. Light fixture according to claim 3, wherein the closing device (21) comprises:
- a duct (23) provided with a vent inlet (26) housed in the inner chamber (7) and a vent outlet (27) corresponding to the opening (18) of the casing (2) to which the frame (20) is coupled;
- a valve (24) arranged between the vent inlet (26) and the vent outlet (27) and configured to selectively prevent the passage of air from the inner chamber (7) towards the filter membrane so as to deactivate the venting device (14); the valve (24) being adjustable by the control device (15) to selectively deactivate the venting device (14).

5. Light fixture according to claim 4, wherein the pump (11) is provided with a pump inlet (16; 30) facing the at least one inner chamber (7) and a pump outlet (17) facing the environment outside the casing (2).

6. Light fixture according to claim 5, wherein the pump inlet and the vent inlet coincide to define a common inlet (30) in the inner chamber (7); the valve (24) of the closing device (21) being a two-way valve adjustable by the control device (15) and configured to assume two positions:
- a pump supply position, wherein the two-way valve (24) allows air to flow between the common inlet (30) and the pump (11), preventing the supply of air to the venting device (14); and
- a membrane supply position, wherein the two-way valve (24) allows air to flow between the common inlet (30) and the membrane of the venting device (14), preventing the supply of air to the pump (11);
the control device (15) being configured to deactivate the venting device (14) by positioning the two-way valve (24) in the pump supply position.

7. Light fixture according to any one of the preceding claims, wherein the control device (15) is configured to assess a suitable sealing level if the at least one pressure detected in the acquisition time interval by the at least one pressure sensor (12) is within a tolerance range or to assess an unsuitable sealing level if the at least one pressure detected in the acquisition time interval by the at least one pressure sensor (12) is outside the tolerance range.

8. Light fixture according to claim 7, wherein the test device (10) comprises a plurality of pressure sensors arranged in different areas within the casing volume (2); the control device (15) being configured to:
• assess a suitable sealing level if the at least one pressure detected in the acquisition time interval by all pressure sensors is within a tolerance range; or
• assess an unsuitable sealing level if the at least one pressure detected in the acquisition time interval by at least one pressure sensor is not within the tolerance range, and, preferably, report which pressure sensor, among the plurality of sensors, did not detect a pressure within the tolerance range.

9. Light fixture according to any one of the preceding claims, wherein the control device (15) of the test device (10) is controllable remotely and/or via an interface of the light fixture itself.

10. Light fixture according to any one of claims 2 to 9, wherein the control device (15) is configured to reactivate the venting device (14) after assessing the sealing level.

11. Light fixture according to any one of the preceding claims, wherein the casing (2) defines at least one base (4), a fork (5), coupled to the base (4) and preferably rotatable about a first axis of rotation (PAN), and a head (6), coupled to the fork (5) and preferably rotatable about a second axis of rotation (TILT); the base (4), the fork (5) and the head (6) being configured to define respective chambers, preferably connected together to define a single volume.

12. Method for testing the tightness of a light fixture (1); the light fixture (1) comprising:
a casing (2) configured to define at least one inner chamber (7) having a given volume;
at least one test device (10) configured to test the tightness of the at least one casing (2) and comprising:
o a pump (11) fluidically communicating with the at least one inner chamber (7) and the environment outside the casing (2);
o at least one pressure sensor (12) arranged in the at least one inner chamber (7);
o a venting device (14) coupled to an opening (18) of the casing (2) and configured to selectively equalise the pressure between the at least one inner chamber (7) and the environment outside the casing (2);
the method comprising the steps of:
- control the activation of the pump (11) and the venting device (14) in such a way that a pressure difference is created between the at least one inner chamber (7) and the environment outside the casing (2);
- acquire data from the at least one pressure sensor (12) in an acquisition time interval;
- assess the sealing level of the casing (2) on the basis of the pressure data acquired.

13. Method according to claim 12, wherein the step of controlling the activation of the pump (11) and the venting device (14) comprises the steps of:
- deactivating the venting device (14);
- activating the pump (11);
- deactivating the pump (11) when the at least one pressure sensor (12) reaches a given threshold value.

14. Method according to claim 13, wherein the venting device (14) comprises:
- a filter membrane configured to allow the passage of air and prevent the passage of liquids and solid particles;
- a frame (20) configured to support the filter membrane and to be tightly coupled into the opening (18) of the casing (2);
- a closing device (21) configured to close the filter membrane;
the method comprising the step of adjusting the closing device (21) to selectively deactivate the venting device (14).

15. Method according to claim 14, wherein the closing device (21) comprises:
- a duct (23) provided with a vent inlet (26) housed in the inner chamber (7) and a vent outlet (27) corresponding to the opening (18) of the casing (2) to which the frame (20) is coupled;
- a valve (24) arranged between the vent inlet (26) and the vent outlet (27) and configured to selectively prevent the passage of air from the inner chamber (7) towards the filter membrane so as to deactivate the venting device (14);
the method comprising the step of adjusting the valve (24) to selectively deactivate the venting device (14).

16. Method according to any one of claims 12 to 15, wherein the step of assessing the sealing level of the casing (2) comprises:
- assessing a suitable sealing level if the pressure detected in the acquisition time interval by the at least one pressure sensor (12) is within a tolerance range; or
- assessing an unsuitable sealing level if the pressure detected in the acquisition time interval by the at least one pressure sensor (12) is outside the tolerance range.
